# EUROPEAN PATENT APPLICATION

(11) **EP 3 029 353 A1**
(43) Date of publication of application: **08.06.2016**
(21) Application number: 14382496.9
(22) Date of filing: 05.12.2014
(51) Int. Cl.: F16F 15/08

(54) **Vibration damping system**

(71) Applicant: Industria de Turbo Propulsores S.A., 48170 Zamudio (Vizcaya) (ES)
(72) Inventor: Arano Garitagoitia, Ismael, 48260 Ermua (Vizcaya) (ES)
(74) Representative: Carvajal y Urquijo, Isabel

(57) **Abstract**

An anti-vibration system for structures made of heat resistant material, formed by nickel alloys difficult to produce. These structures house bearings designed to work at a high number of revolutions, thereby being highly sought after with axial and radial loads, requiring an extremely fine surface finish. They should also have very narrow geometric tolerance levels. Machining operations produce vibrations or chattering in the walls of the structure treated. The invention therefore aims to prevent these vibrations from being produced as the structure is manufactured. This aim is achieved by means of a retractable multi-piece mechanical tool, assembled piece by piece inside cavities difficult to access.

## Description

### Field of the invention

The present invention falls within the field of the aeronautical industry and more specifically, within the machining of turbine structures formed by thin wall components. It is characterised by being difficult to access in order to position reinforcements, which make it possible to secure the walls during the manufacturing process.

### Background of the invention

Currently, the material these components are made of is heat-resistant and formed by nickel alloys difficult to produce. This kind of structure houses bearings designed to work at a high number of revolutions and is therefore highly sought after with axial and radial loads. It must also have very narrow geometric tolerance levels and requires an extremely fine surface finish. Specifically, the mechanism derived from these working loads has a number of very demanding geometric requirements. The piece in question has two very thin walls ending in a number of flanges that must be machined around and on the milling bit, before applying the end surface finish to both flanges at the same time. All of these machining operations produce vibrations or chattering in the walls of the structure treated and, in order to obtain the surface tolerance required, said vibration must be prevented. The aim of the present invention is therefore to prevent the vibrations produced as the structure is manufactured.

Given that the piece is circular, with two high walls joined at its base and elements that prevent reinforcements from being inserted, it is therefore a difficult piece to access. The usual methods for preventing this vibration consist in filling the cavity with hot wax, which solidifies when it cools, thereby making the cavity rigid or alternatively, using bags inflated with a gas or liquid. The most common method of using hot wax is disadvantageous because the process takes a long time to complete and many hours must be spent preparing each piece and cleaning after machining is complicated and costly. Moreover, wax remnants are left behind, which contaminate and may affect subsequent welded joins between both walls. Airbag or inflated bag systems are problematic given that pieces are deformed, the chambers are punctured and the bags deteriorate as a result of the oils and lubricants used during machining. The solution proposed differs from traditional methods completely and consists of a retractable multi-piece mechanical tool that can be assembled piece by piece inside the cavities that are difficult to access. In order to ensure that the invention complies with the requirements of novelty and inventive step, a comparative study of the state of the art was carried out.

Indeed, patent WO2007102996A2 reveals a multi-piece tool suitable for reinforcing pieces prone to undergoing vibration during a machining process. The tool, inserted into a cavity (14) between the outer ring (15) and the inner ring (16), comprises a number of rubber bands (20, 21, 22, 23), which come into contact with the piece and are positioned in a fixed spot by means of a number of intermediate separators (13a, 13b, 13c, 13d).

In order to compare it, it is important to bear in mind that the tool, object of the invention, consists of the following elements: a plastic ring, a number of flanges, a number of rubber bands, a number of separators and an upper platen. The plastic ring is inserted between the walls and acts as a base. Once the ring has been inserted, the flanges are folded down and serve to support the pieces that support the rubber bands, which come into contact with the internal walls of the circular piece and are positioned in a fixed spot by means of a number of intermediate separators fixed to the base ring. Furthermore, the upper platen, which is screwed down, acts as a lid, thereby preventing the pieces from coming out of position.

The differences between document WO2007102996A2 and the tool object of the invention are as follows: The patent focuses on a very specific use, i.e. preventing vibrations upon coupling and uncoupling a relative rotational movement between two mechanical elements. Meanwhile, the tool object of document WO2007102996A2 is designed to absorb the mechanical torque transferred from the motor element to the driven element, rather than to prevent vibrations between the walls of a circular piece. Moreover, the tool object of document WO2007102996A2 does not include a metal ring that serves as a base for the rubber bands as such. Rather, the cavity between the outer ring and inner ring itself serves as a base for said bands. Furthermore, the separators used to position the rubber bands also form part of the cavity, rather than of the tool itself. As far as the size and/or thickness of the pieces are concerned, WO2007102996A2 does not go into detail.

The remaining differences between document WO2007102996A2 and the tool object of the invention are considered to be even more relevant still as characteristics that focus on the introduction of the anti-vibration system into cavities that are difficult to access. Indeed, the fact that the tool proposed may be assembled piece by piece in areas that are difficult to access, in addition to the technical elements and/or characteristics linked to this end (retractable tool, support flanges that may be folded down, upper platen, base ring and rubber bands, etc.,) and, more importantly still, the relationship between the same designed to achieve this end, are considered to be particularly relevant technical characteristics.

### Description of the invention

The present invention aims to make available a retractable multi-piece tool that can be assembled piece by piece inside cavities difficult to access, designed to reinforce thin pieces with high projections, which undergo high bending moment that causes both the appearance of vibrations as a result of proximity to natural excitation frequencies during machining and great distortions as a result of plastic deformation, also prone to experience vibrations during machining processes. This tool is inserted into the cavity between the outer and inner rings of this structure, although the same may be used for a diverse range of purposes, for example, in any thin wall structure in which natural excitation, i.e. chattering is produced as a result of machining.

The object of the invention is the tool, consisting of a PVC ring that serves as a base, where, once inserted, a number if flanges that act as a support for a number of rubber bands in contact with the piece are folded down,, which are positioned in a fixed spot thanks to a number of intermediate separators fixed to the base ring and finally, an upper platen, which is screwed down and serves as a lid, preventing the pieces from coming out of position.

A further object of the invention is the ability to assemble the tool piece by piece in areas that are difficult to access (retractable tool, support flanges that may be folded down, upper platen, base ring and rubber bands, etc). The relationship between these elements that make up the tool is just as important when it comes to achieving their end.

The following advantages are derived from that described above: The tool may be positioned inside the piece without producing deformations, the inner parts do not get dirty (since cleaning must be carried out at the end, where all particles larger than 300 micas must have been removed) and finally, the tools may be machined from both hard metal and ceramic (thereby reducing machining time greatly), meaning that the multi-piece tool system is stable for a wide range of external excitations.

### Brief description of the drawings

Below is a brief description of a series of drawings that facilitate a better understanding of the invention and are expressly related to an embodiment thereof, presented as a non-limiting example of the same.
Figure 1 represents the structure in which the vibration or chattering effect is produced.
Figure 2 is a cross-section of the structure shown in the previous figure, wherein it is possible to observe the thin walls formed between the outer and inner rings.
Figure 3 represents the retractable multi-piece tool with an exploded view of the metal base ring and the remaining elements having been mounted.
Figure 4 shows ten different positions adopted by the respective elements of the multi-piece tool as they are mounted to the ring inside the structure.
Figure 5 is a cross-section of Figure 1, with the retractable tool mounted inside the same and also in a cross-section.

### Detailed description of the invention

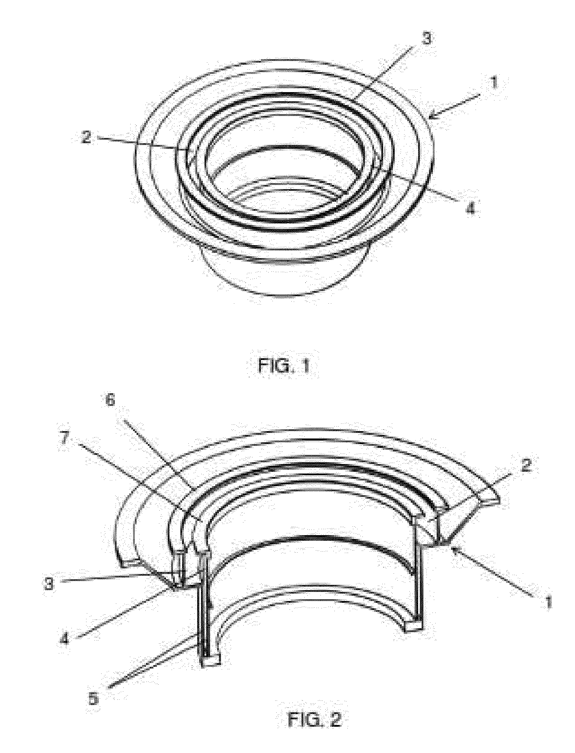

As shown in Figure 1, the structure (1) is a radial structure, which, owing to its subsequent use in an aeroplane engine, must have extremely fine surface finishes. In order to apply said surface finishes, the structure must be mounted completely, such that tolerances outside the average are not produced during hypothetical mounting carried out after machining. As such, there is a narrow cavity (2) between the outer ring (3) and inner ring (4) of said structure (1), which must be fixed so that vibrations or chattering are not produced during machining, therefore making it possible to reach the tolerances required and to attain the surface roughness desired.

In Figure 2, it is possible to better observe the thin, slender walls (5) formed between the outer ring (3) and the inner ring (4), particularly in the lower portion of the structure (1). The flanges (6, 7) of the walls of said rings constitute those parts that vibrate during machining, thus meaning the anti-vibration solution must be located inside the cavity (2) formed between the flange (6) of the outer ring (3) and the flange (7) of the inner ring (4). There is an additional difficulty when attempting to attain a good anti-vibration tool, since there are through fixation elements (not shown in the Figure) inside the cavity (2) of the structure (1), which fix the walls of the rings and in turn, constitute elements that must be avoided when it comes to introducing any kind of tool.

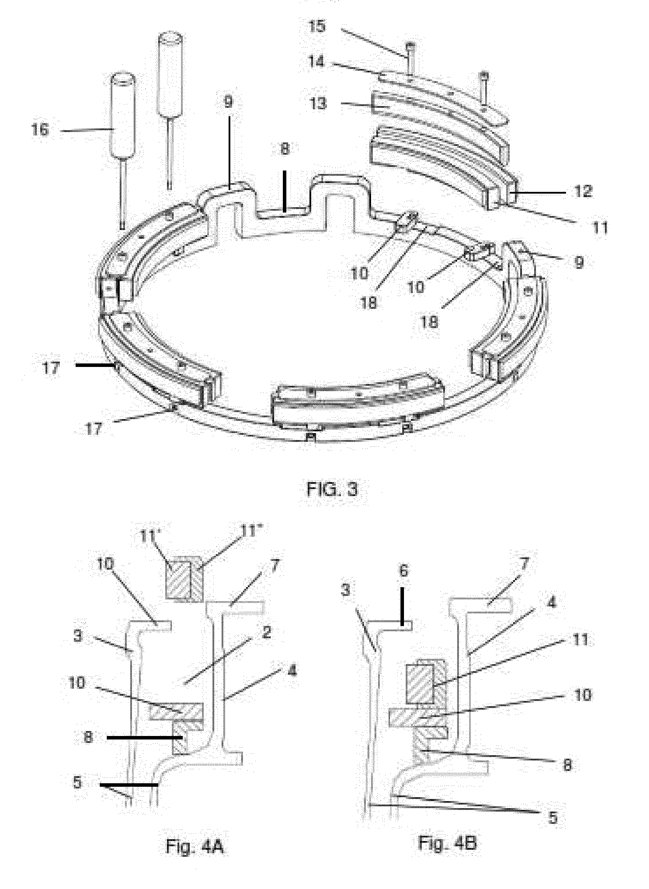

As shown in Figure 3, the tool is formed by a base ring (8), the main characteristic of which is how thin it is and the arc-shaped interruptions (9) thereof, formed along the length of its perimeter, which are essential for preventing collisions with the through fixation elements between the walls of the rings. The ring has various flanges (10) in its upper portion, characterised in that they may be folded down such that, when the ring (8) is introduced into the cavity (2), the flanges (10) are folded and once inside, are unfolded in order to provide a support surface large enough for the remaining elements that make up the retractable tool. The flanges (10) are distributed such that they avoid the arc-shaped interruptions (9) in the ring (8).

The remaining components, the purpose of which is to reinforce thin pieces and pieces that are difficult to access, are formed by two pieces containing rubber in their side portions (11, 12): one piece (11) to be arranged in contact with the wall of the outer ring (3) and another piece (12) for the wall of the inner ring (4), a separator (13) being introduced between the two pieces with rubber (11, 12), in addition to an upper platen (14) completed by the join to its corresponding fixation elements (15) and the tightening tools (16). All of these components are split and cover most of the surface of the ring (8) except the discontinuities formed by the arcs (9).

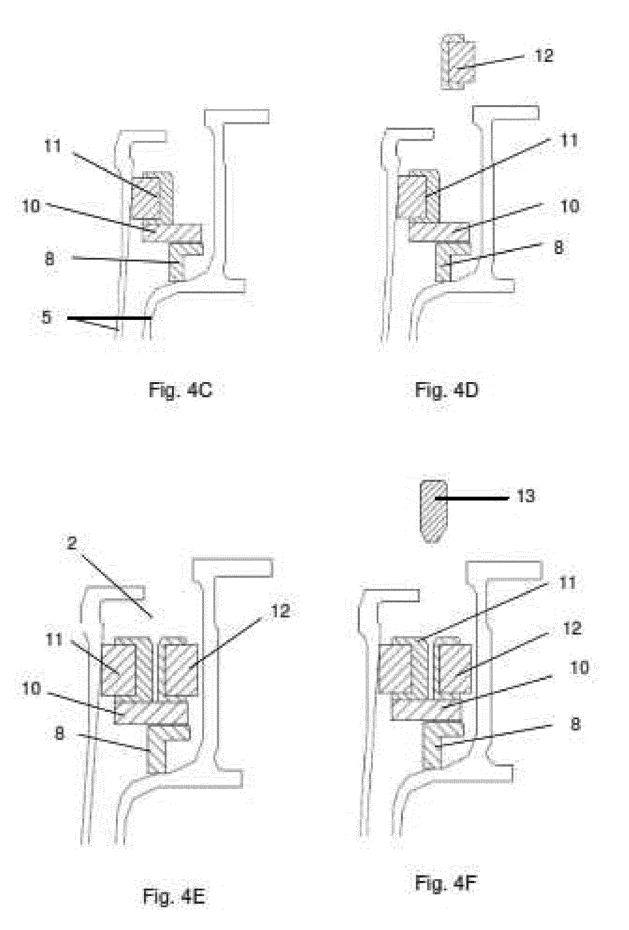

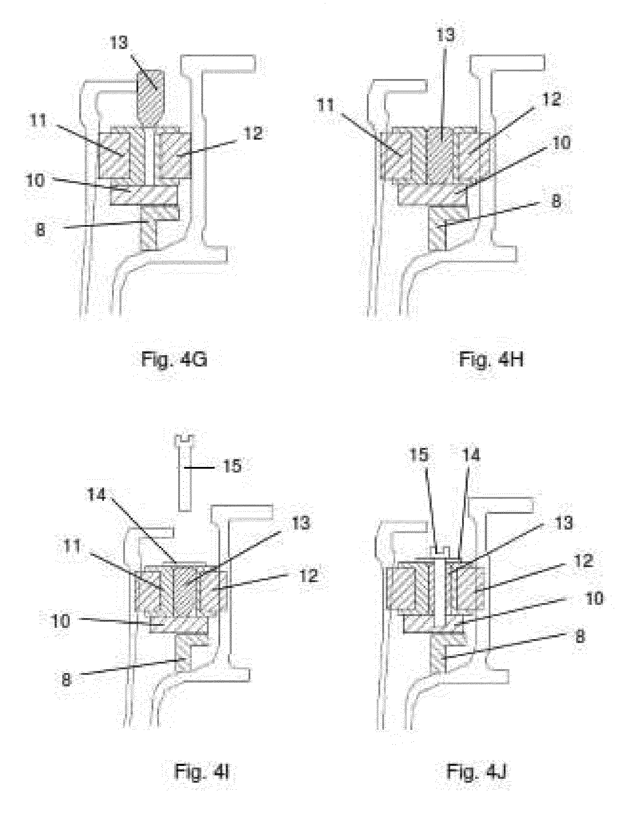

Figure 4 shows the various steps followed during the mounting of the multi-piece tool object of the invention. The first figure shows the cavity (2) formed between the outer ring (3) and the inner ring (4) just before the walls (5) are narrowed.

In the first step, the base ring (8) is introduced, the same coming into contact with the bottom of the cavity (2). This base ring (8) has small castellated housings (17) at its base, in order to make it possible for the flanges (10) to be fixed to its upper surface, where a number of small hollows (18) have also been made to accommodate and level said flanges (10). Therefore, once the ring (8) has been introduced, the corresponding flanges (10) are then rotated, forming the base for the pieces with rubber (11, 12). The piece with rubber (11) corresponding to the outer ring (3) is firstly introduced, being adjusted against said wall, as shown in Figures 4A, 4B and 4C. The piece with rubber (11) is formed by a rubber band (11') inside a C-shaped piece (11"), whilst the piece with rubber (12) opposite is formed symmetrically.

Once the first piece with rubber (11) has been placed, the second piece with rubber (12) is placed as shown in Figures 4D and 4E.

In the next step, the separator (13) is introduced and placed between the two pieces with rubber (11, 12). The wedge formed by the separator (13) presses both pieces with rubber (11, 12) against the walls of the outer ring (3) and the inner ring (4), thereby fixing them in order to prevent vibrations, as shown in Figures 4F, 4G and 4H.

Finally, in order to complete fixation, an upper platen (14), formed by a narrow plate arranged on the separator (13), is placed spanning part of the pieces with rubber (11, 12). A fixation element (15) that passes through the inside of the separator (13) is then introduced and joined, preferably by means of threading, to the fold-down flange (10) arranged on the ring (8), as shown in Figures 4I and 4J.

Everything described above is valid for any radial thin wall structure in which one wishes to apply the anti-vibration tool in order to counteract the chattering effects produced during the machining thereof.

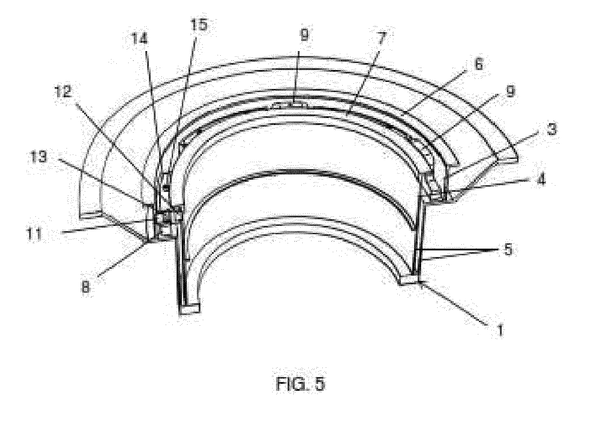

The tool is preferably made of plastic materials, in order to prevent any possible hits and as a result, the creation of notches or blemishes, upon colliding against the flanges (6, 7) of the outer ring (3) and the inner ring (4) during the mounting or end dismounting process shown in Figure 5.

## Claims

1. An anti-vibration system for a circular piece that forms part of a radial structure of an aviation engine, with thin, slender walls (5) and an inner cavity (2) that is difficult to access, **characterised in that** it is made up of a set of assembled parts that form a retractable tool used in machining processes carried out during the surface finishing process applied to the circular piece delimited by a flange (6) of an outer ring (3), a flange (7) of an inner ring (4) that forms an inner cavity (2) between a thin wall (5) of the outer ring (3) and a thin wall (5) of the inner ring (4), this cavity (2) being filled with the parts of the tool that may be assembled, including the ring (8), which serves as a base, inserted inside the cavity (2), a number of flanges (10) being folded down once inserted, these flanges serving as a support for a number of pieces with rubber (11, 12) that come into contact with the outer ring (3) and the inner ring (4), positioned in a fixed spot by means of the action of a number of intermediate separators (13), fixed to the base ring (8) and finally, an upper fixed platen (14) which acts as a lid, preventing the pieces from coming out of position.

2. The anti-vibration system according to claim 1, **characterised in** adding an upper platen (14) to the separator (13) being introduced between two pieces with rubber (11, 12), this platen (14) completing the join to its corresponding fixation elements (15) and corresponding tightening tools (16), the pieces with rubber (11, 12) and the upper platen (14) being split and covering most of the surface of the ring (8), except discontinuities formed by arcs (9).

3. The anti-vibration system according to claim 1, **characterised in that** the base ring (8) will be thin and have arc-shaped interruptions (9) along the length of its perimeter, serving to prevent collisions against through fixation elements arranged between the walls of the rings.

4. The anti-vibration system according to claim 1, **characterised in that** the flanges (10) may be folded down, the flanges (10) therefore being folded upon introducing the ring (8) into the cavity (2) and being unfolded upon placing the same inside, in order to provide a support surface large enough for the remaining elements that make up the retractable tool, the flanges (10) furthermore being distributed in such a way that they avoid the arc-shaped interruptions (9) in the ring (8).

5. The anti-vibration system according to claim 1, **characterised in that** the base ring (8) has small cavities (17) at its base, in order to facilitate the fixing of the flanges (10) to its upper surface, where a number of small hollows (18) have also been made, serving to accommodate and level said flanges (10) when folded up.

6. The anti-vibration system according to claim 1, **characterised in that** a rubber band (11') inside a C-shaped piece (11") forms the piece with rubber (11), the piece with rubber (12) opposite being formed symmetrically.

7. The anti-vibration system according to claim 1, **characterised in that** the tool will preferably be made from plastic materials, in order to prevent any possible collisions - and to prevent notches or blemishes from being created as a result - with the flanges (6, 7) of the outer ring (3) and inner ring (4) during the mounting or dismounting of the system.
